# EUROPEAN PATENT APPLICATION

(11) **EP 4 220 220 A1**
(43) Date of publication of application: **02.08.2023**
(21) Application number: 22153783.0
(22) Date of filing: 27.01.2022
(51) Int. Cl.: G01S 7/52, G01S 15/89

(54) **ELECTRONIC SYSTEM**

(71) Applicant: Pulsify Medical, 3001 Leuven (BE)
(72) Inventor: STOFFELS, Steve, 3001 Leuven (BE)
(74) Representative: DTS Patent- und Rechtsanwälte Schnekenbühl und Partner mbB

(57) **Abstract**

The invention relates to an electronic system (1) comprising:
- an electronic array (3) of a plurality of sensing and/or actuating elements (3a);
- a control unit (40), which is coupled to the electronic (3), for controlling the electronic array (3); and
- a data processing unit (41) for receiving data from the electronic array (3) and processing the received data;
wherein the electronic system (1) further comprises a beam former module (43), wherein the beam former module (43) is configured for addressing the plurality of sensing and/or actuating elements (3a) for forming a beam (B1, B2).

## Description

The present invention relates to an electronic system, in particular for medical purposes such monitoring and/or modulating of physiological parameters.

Wearable electronic monitor systems can be used to monitor physiological parameters such as cardiac function over time. For example, such an electronic system can be embodied as monitoring and/or actuating system with a plurality of sensors, such as electrodes, ultrasound sensors, mini-cameras, light-emitting elements and the like. The electronic system can be body worn in a patch type format.

US 2016/0136462 A1 discloses a wearable electronic system in the form of an ultrasound device and method of using the device including a power controller with a power source and at least one integrated circuit that delivers electrical power to an applicator. The applicator is electrically coupled to the power controller and a surface of the applicator transmits ultrasound to a wearer for a given duration. The applicator includes radio frequency (RF) drive electronics, an ultrasound transducer coupled to the drive electronics, a monitoring apparatus that includes a thermal cutoff coupled to the drive electronics.

WO 2018/102828 A1 discloses an ultrasound coupling patch for use with ultrasound transducers, and more particularly to ultrasound coupling patches having a gel capture feature.

WO 2019/162485 A1 discloses a method and an apparatus for performing ultrasound measurements of a propagation medium containing non uniformities, with a transmitter/transducer with a plurality of transmitting elements for emitting ultrasound excitation pressure waves.

In electronic systems with a large number of sensor and/or actuator elements, individually sampling every single sensor and/or actor element leads to massive amounts of data. The system needs accordingly high capabilities for the throughput and the processing of this data. A high amount of power is required to drive and read such an array and all its individual sensor and/or actuator elements.

To reduce the overall data-rate and the power consumption while maintaining sufficient image quality for the respective application, the system complexity needs to be considered.

It is the problem of the invention to provide an electronic system that allows efficient data acquisition, treatment and processing, without impacting the overall data quality negatively.

This problem is solved by an electronic system according to claim 1 of the attached set of claims. Further advantageous embodiments are given in the dependent claims.

Accordingly, an electronic system comprises:
- an electronic array of a plurality of sensing and/or actuating elements;
- a control unit, which is coupled to the electronic, for controlling the electronic array; and
- a data processing unit for receiving data from the electronic array and processing the received data;
wherein the electronic system further comprises a beam former module; wherein the beam former module is configured for addressing the plurality of sensing and/or actuating elements for forming a controllable beam.

The invention is based on the idea that a plurality of sensing and/or actuating elements are controlled by a beam former module, in such a way that the sensing and/or actuating elements generate or detect a physical beam (e.g. sound, light, RF signals, ...). A beam of signals sent out by the sensing and/or actuating elements can be such that signals are only sent out by specific sensing and/or actuating elements, i.e. a selected number of sensing and/or actuating elements out of the whole number of sensing and/or actuating elements.

In particular, the beam former module can be configured to apply a time delay to at least one of the sensing and/or actuating elements or a plurality of the sensing and/or actuating elements.

This allows advantageously easy control for high-resolution measurements and/or beam focusing and/or beam steering.

In particular, the time delay may be applied, when the electronic array element or the plurality of sensing and/ or actuating elements is used for sending ultrasound pulses and/or receiving ultrasound signals.

The time delay for an electronic array element or a plurality of sensing and/ or actuating elements may be defined relative to controlling other transducer array elements.

Also, the beam former module and/or another unit of the system may be utilized to determine the delay. In particular, the delay is determined for each electronic array element or for a plurality of sensing and/ or actuating elements, to which the determined delay is to be applied.

In particular, the beam former module is configured to apply a time delay to at least one of the sensing and/or actuating elements or a plurality of the sensing and/or actuating elements.

This allows advantageously easy control for high-resolution measurements, beam focusing and/or beam steering.

Furthermore, the electronic system further can comprise a sub-array definition module, which is configured to define at least one sub-array of sensing and/or actuating elements.

Further, the sub-array definition module can be configured to control the at least one sub-array as a functional unit for sending at least one actuation signal and/or receiving at least one sensing signal. A functional unit is a unit of sensing and/ or actuating elements, which are functionally enabled and set active together. In other words, several sensing and/ or actuating elements are grouped together as afunctional unit and treated as a single "element", i.e., the combined sensing and/or actuating elements are driven at that same time as if they are a single unit.

The subarray definition module contains functionality to select the active elements of the electronic array. In an electronic array with a row-column based architecture this means that a row and/or column select module can be present as part of the subarray definition module, this module will define the active rows and columns of the electronic array, the intersection of active rows and active columns defines the subarray. Furthermore, a channel select module can also be present. The channel select module allows advantageously to connect "L" number of outputs of the electronic array to a set of "M" inputs of the analog front-end and/or beamformer, whereby M<=L, thus allowing to reduce the amount of channels needed drive the array. The channel select module can be physically implemented as a part of the electronic array e.g. in the periphery, next to the array elements, or alternatively the channel select module can be implemented in a separate IC. The channel select module outputs can connect directly to the beam-former, but preferably it first connects to a signal conditioning module in the analog front-end (e.g. filter, amplifier and/or time-gain amplifier). The channel select module can configured to connect the channels along one or multiple dimensions of the electronic array, e.g. in a row-column based architecture the channels can be connected along the rows and/or columns.

The electronic system can be configured such that signals can be handed over between different beamformer modules, and further configured such that the sub-array definition module is configured such that the at least one subarray can be positioned at any arbitrary location in the larger electronic array of the electronic system.

Moreover, at least two beam former modules can be provided and the electronic system can be further configured such that a partial beam-forming is done in separate beam former modules before combining the signal in a second stage beam-former. There can be one or more beam former modules.

The beam former module or the beam former modules can be implemented as a hardware part of the electronic system.

Each beam former module can be embodied such that it can control a portion of the electronic system.

In particular, the beam former can be implemented in hardware modules (e.g. circuits or IC's) of the electronic system. Multiple beam formers can be present in the system, with each beam-former controlling a part of the electronic array. The beam-formers can be implemented in a single IC or distributed over different IC's. The beam-former for generating beams and for receiving beams can be two separate hardware implementations. For example, in the send channel the beam-former for generating the physical pulses can be implemented as a set of pulsers connected to the physical transducers. By controlling the timing between the pulsers separately or in a coordinated way allows to control the generation of the physical beam. The receive beam-former can be implemented as a hardware module which controls the timing of the individual receive channels and combines them in a coherent way. Implementing the receive beam-former in hardware allows advantageously to reduce the data rate towards the rest of the system by combing N signals from the sensing elements in the electronic array into at least one output. The receive signals from the sensing elements are combined by the receive beam-former in such a way as to produce the required beam-forming, -steering and/or -focusing. N can e.g. be 4, 8, 16, 32 or values in between, while the amount of output channels M is smaller than N and preferably 1. This reduces the data rate towards the rest of the system by a factor N/M.

Furthermore, it is possible that the beam-former module is implemented in at least one integrated circuit (IC).

Implementing various beam-formers spread within the same IC or over different IC's can create discrete boundaries between the different parts of the electronic array, over which beam-forming cannot occur. In our invention we address this by configuring the beam formers in such a way that signals can be exchanged between the different beam-formers. This allows one beam formers to take in signals from an adjacent part of the electronic systems and advantageously allow beam forming over the boundaries of the different parts of the electronic array. The connection can be done physically through wires routing from one beam former module to another, signals from one domain can in such a way be passed to a beamformer of another domain, thus allowing beam-forming with elements from adjacent parts (domains) of the electronic system. This physical interconnection can be done by branching the signal lines just before the beamformer stage and routing the signals from one beam-former channel to another beam-former channel and using switches to control the signal path, in a more general way the signals can be passed between more than two beam-forming stages. If the beam-formers are implemented in IC's the signal can be routed internally in the same array, for the case one IC contains multiple arrays or the signals can be routed between two different IC's for connecting beam-formers implemented in different IC's. Another option to interconnect at least two beam-formers is to branch the signal lines coming for the electronic array, before they reach the input stage of the control unit, e.g. if the beamformers are implemented in IC's a signal line would branch of and be connected to two different IC's, switches on the electronic array or in between the electronic array and the IC would control the signal path. Alternatively, the connection can be implemented virtually, where each beamformer performs summation of part of the signal, while the other beamformer performs the summation of the other parts of the signal. In a final step the signals are combined in an additional common output stage to create a fully beam-formed signal. This output stage can be implemented in software or alternatively as a second hardware stage.

The HW beam-former can be configured in such a way that it can deal with signals produced by an array which is configured in a row and column architecture. By connecting the HW beam-former to the outputs along the rows and/or the columns of the array, will allow the beam-former to receive signal from either rows and columns or a combination thereof. Thus, advantageously allowing receive steering in azimuthal and/or elevational directions.

The beam-former module can be configured to drive the rows and columns of the electronic array.

Furthermore, the subarray definition module and the beam-former module can be combined in such a way that a smooth positioning and beam-forming of the subarray is possible in the larger electronic array, smooth in this context referring to the ability to position the subarray with the larger electronic array with an accuracy equal to the size of a single electronic array element or a multiple of this value. The position accuracy can vary along different dimensions of the array. For the channel select module, such a smooth positioning can be enabled by routing different output of the arrays to the same input of the beam-former, while a switch (or collection of switches) can control the signal path and the positioning of the receive channels in the larger array. In particular an interleaving of the channels from the electronic array towards the channels of the beam-former can advantageously allow a positioning of the sub-array with an accuracy of one column (e.g. for a 16-channel beam-former, the first channel would connect to the 1^{st} row, 17^{th} row, 33th row, etc... of the electronic array while the second channel would connect to the 2th row, 18^{th} row, 34^{th} row, etc... of the electronic array). Other configurations are possible if courser steps are acceptable. Another option is to place a mux/de-mux in between the beam former and the electronic array outputs. The mux and/or de-mux allows address encoding to reduce the amounts of interconnects needed between the beam-former and the electronic array. Routing scheme's such as interleaving and/or (de-)muxing allow to advantageously reduce the channel count, if such schemes are implemented directly on the electronic array it provides the further benefit of reducing the amount of signal paths needed between the control unit and the electronic array. Different schemes could be applied for the send- and receive beamformer, e.g. the send beam-former can have a channel for each individual array input, while the receive beam-former can have an interleaving between the electronic array outputs and the beam-former inputs. Any other combination with interleaving, (de-)muxing or direct connection could also be envisioned.

The beam-former can be either configured through hardware or software to reduce complexity or allow for higher resolution imaging. In particular a combination of all channels can be done in hardware to produce a single output an reduce data rate. On the other hand, if resolution would be a prime requirement either a partial summation or a bypass could be done of the beam-former. The individually sampled signals could then be combined in a later step (e.g. in software), enabling techniques such as synthetic aperture imaging for improved image quality or multi-line transmit/acquisition for improved data-rate.

The electronic system can further comprise an envelope detection module. In particular, the envelope detection module is configured to reduce the data rate towards the digital parts of the electronic system, especially wherein the envelop detection module is implemented in the hardware and hardware based. A hardware-based beam-former in the receive chain can be combined with a hardware-based envelope detection module to further reduce the overall data-rate. The data-rate can be decreased by such an envelope detection module by eliminating the high frequency carrier and only leaving the lower frequency envelope data, which carries information. Envelope detection can be done through a combination of signal rectification (e.g. with a diode) and low pass filtering, through an IQ-demodulator or any other conceivable technique for signal demodulation.

The electronic system electronic system can further comprise an apodization module, wherein the apodization module is configured such that a hardware based apodization is performed before passing the signals into the beam-former. So, the beam-former in the receive chain can be combined with a hardware based apodization. This allows to provide signal apodization in a power efficient way and allows to improve resolution and/or SNR.

In particular, the electronic system can be e.g. an electronic system and the electronic system can be in general an electronic system as disclosed by WO 2019/162485 A1. The further disclosed features can be added for example to the system as disclosed in WO 2019/162485 A1.

Thus, the system advantageously requires less computational capacities and the power consumption of the electronic system is reduced.

The invention is based on the idea that complexity and data throughput are reduced by a hierarchical aggregation of sensing and/or actuating elements. On the other hand, the electronic device's operation is not be inhibited or only minimally impacted.

Further, there is a controller and the controller defines or is aware of the columns and row, which are active for signal transmission and/or receiving, and the intersection of active N and active M is defining a sub-array. This way, the addressing of the sensing and/or actuating array elements can be done in a less complex way, as they will be addressed in the groups of sensing and/or actuating array elements which are called the sub-array.

The system may be configured to monitor physiological parameters such as cardiac function over time. For example, such an electronic system can be embodied as monitoring and/or actuating system with a plurality of sensors, such as electrodes, ultrasound sensors, mini-cameras, light-emitting elements and the like. The electronic system can be body worn in a patch type format. If the system is configured for cardiac monitoring, which may for example comprise monitoring of cardiac activity and/or cardiac properties of a patient. Monitoring cardiac activity may comprise monitoring of parameters such as cardiac rhythm and/or cardiac output.

The system has at least one electronic array, i.e., a device or unit comprising a plurality of sensing and/or actuating elements . The electronic array can be embodied in a structured arrangement in two dimensions. In other words, the electronic array can have a two-dimensional structure like a two-dimensional array with a row-column structure. The outline can be rectangular, round, oval or quadratic. Also a three-dimensional array can be envisioned. In particular, the electronic array may have a chip design. The electronic array may be for example embodied as transducer array and the sensing and/ or actuating elements can be embodied as transducer array elements. The transducer array elements are units, which may be used as an actuator for generating an ultrasound pulse or signal. Alternatively or additionally, the transducer array elements may also be used for receiving or detecting an ultrasound pulse or signal. Instead of transducers, also electrodes or light emitting diodes or cameras and the like may be used as sensing and/or actuating elements.

In order to reduce the complexity of the system, several sensing and/or actuating elements may be combined into a functional unit and treated as a single "element", i.e., the combined sensing and/or actuating elements are driven at that same time as if they are a single unit.

The sensing and/or actuating elements in the electronic array can be connected in series or parallel, such that they can be driven optimally.

In particular, the sensing and/or actuating elements may be configured such that they are individually controllable.

In an embodiment of the system, the electronic array is flexible. Thus, the system can advantageously adjust its geometry to a probe or sample surface, e.g., a patient's body. In particular, the sensing and/or actuating elements may be flexibly oriented towards each other.

For example, the sensing and/ or actuating elements may be supported by a flexible substrate such that they are arranged on a flat or curved plane. The substrate may, e.g., comprise a polymer material.

In an embodiment of the system, the sensing and/or actuating array is integrated into an adhesive patch for fixing the sensing and/or actuating array to a patient's body. The system can then advantageously be easily used, e.g., for monitoring a patient's body functions, such as physiological parameters as neurological parameters, heart rate, pulse, breathing, blood flow, fluid movement, especially for long-term monitoring. The patch can be an adhesive patch.

The electronic array may be integrated into the patch by providing it with an adhesive area, which is suited for attaching the patch to a patient's body surface. Also, a textile or other flexible material may be provided with an adhesive material and used to fix the electronic array to the body surface. Alternatively a mechanical strap without adhesive or a combination of strap and adhesive might be provided to fix the electronic array to the body surface. In particular, the patch may be configured such that it secures the electronic array in close proximity to the body surface.

Also, the electronic system comprises a control unit. The control unit may comprise several components, which may be structurally integrated with each other, for example in a common casing or envelope structure, or which may be implemented as structurally separated components, which may be couple to each other.

The sensing and/or actuating elements are configured to generate and/or receive signals, for example electrical signals, light signals, sound signals, ultrasound pulses or signals, based on a control signal. To provide the respective control signals for the electronic array, the control unit may comprise a send module and a receive module, which may be implemented in a driver module for the electronic array and/or for transistors, which may control the sensing and/or actuating elements.

The control unit may be configured to perform different tasks such as, but not limited to, the following examples: The control unit may be configured to perform digital signal processing and/or filtering. Also, the control unit may be configured to perform operations related to storing and/or retrieving information, in particular in a memory module, such as a random access memory (RAM) module. Also, the control unit may be configured to perform operations for driving an external interface, such as an interface to a memory module, a transceiver unit, e.g., via a USB interface or a wireless interface, and/or receiving control signals from other units. The control unit may also perform operations for controlling the transducer array, e.g., through a switch linked to a transducer array element, such a switch can be a transistor.

The control unit may consist of or comprise one or several microprocessors. The control unit, in particular a microprocessor of the control unit, may be fully or partially integrated into a printed circuit board (PCB).

The PCB might be rigid, flexible, stretchable or a hybrid combination thereof.

In an embodiment, the system further comprises a beam former module with a plurality of transducer elements, where the transducers are the sensing and/or actuating elements. Herein, the beam former module is configured to apply a time delay to at least one electronic transducer array element or a plurality of sensing and/ or actuating transducer array elements. This allows advantageously easy control for high-resolution measurements, beam focusing and/or beam steering.

In particular, the time delay may be applied, when the electronic transducer array element or the plurality of sensing and/ or actuating transducer array elements is used for sending ultrasound pulses and/or receiving ultrasound signals.

The time delay for an electronic transducer array element or a plurality of sensing and/ or actuating transducer array elements may be defined relative to controlling other transducer array elements.

Also, the beam former module and/or another unit of the system may be utilized to determine the delay. In particular, the delay is determined for each electronic transducer array element or for a plurality of sensing and/ or actuating transducer array elements, to which the determined delay is to be applied.

In particular, the control unit may comprise an ASIC for implementing a beam former control, and/or a design for a signal processing algorithm, e.g., for applying spatial and/or temporal sparsity conditions for sending ultrasound pulses and/or for collecting or providing data (related to the measurements performed by the ultrasound device and the ultrasound pulses and signals). In particular, the beam former control can for example comprise an electronic delay and sum circuit that can apply different delays to a certain number of transducer array elements, for example 8 to 32, e.g. 14, 15, 16, 17 or 18 transducer array elements or functional units comprising several connected transducer array elements (e.g. 14, 15, 16, 17 or 18). It may sum the output of these channels into one single output value. In particular, by applying specific delays to each functional unit of transducer array elements, an ultrasound pulse may be generated in a coordinated fashion such that a specific profile for the ultrasound beam is obtained. Also, elements receiving ultrasound signals may be controlled by a beam former in a coordinated way to provide targeted measurements inside a sample volume.

The data processing unit may be implemented in different ways. It may for example comprise a microprocessor. In particular, it may comprise an ASIC design. Also, the data processing unit and the control unit may be implemented as software modules that are run, at least partially, on a common computational unit. For example, a processing unit may read from a memory and execute instructions for performing operations to implement the data processing unit and/or control unit.

Also, the data processing unit may comprise one or several analog-digital converters (ADC) and/or digital-analog converters (DAC). These converters are configured to link analog and digital channels to each other and allow both digital data collection and treatment, and treating analog control and detection signals. A time gain controller may be implemented using a DAC element and/or a different architecture.

The sub-array definition module may be implemented as software module, comprising instructions for computational operations that implement the function of sub-array definition . This software module may in particular be implemented as a module of the control unit. Specifically, the sub-array definition module may be comprised, at least partially, by the control unit and/or by the data processing unit.

The sub-array definition module implements functions to reduce data and sensor complexity and/or quantity. Such functions may impact the generation and/or the detection of signal beams, such as e.g. electrical pulses, magnetic field pulses, light beams, ultrasound pulses and signals by the transducer array, or they may influence the data acquisition and/or treatment.

The coupling between the electronic array and the control unit may comprise a wire connection, in particular an interface for data and/or power transmission between the electronic array and the control unit. In particular, the control unit and/or a part of the control unit may be arranged on the electronic array or may be integrated with the electronic array into one common part.

In particular, there is a wire connection and/or a wireless interface provided, if the control unit controls the electronic array. If a wireless electronic array is implemented, the control unit may be arranged on the electronic array and/or integrated into one component with the electronic array.

In particular, if the electronic array is connected to another element by a wire, at least part of the controlling of the electronic array may be implemented on the electronic array and/or integrated into one component with the electronic array. Also, an additional control unit may be provided, e.g., in a separate PC or control unit, when there is access through wires to the electronic array.

In an embodiment, the electronic system further comprises a power source unit for providing energy to the electronic array and/or the control unit. The system can thus be advantageously used in a very flexible manner, in particular when a portable power source is provided. For example, the power source may comprise a battery, which is integrated in a portable device as a component of the system.

Rather than operating the electronic array as a single whole and using each element as an individual unit, a sub-array scanning architecture may be used, i.e., groups of sensing and/or actuating elements are combined to functional units. In particular, neighboring elements are combined.

In particular, a control algorithm may be provided for controlling each sub-array within the electronic array. The control algorithm may control, for each sub-array, a location of the sub-array within the plurality of sensing and/or actuating elements. Also, the control algorithm may control, for each sub-array, a focus depth and/or a steering angle for an signal sending beam profile and/or an signal receiving beam profile implemented by the sub-array of sensing and/or actuating elements; such a beamforming algorithm may be implemented as a software module for a programmable unit and/or by chip design.

When individual sub-arrays are controlled as functional units for sending signal pulses and/or receiving signals, the system may for example be configured to perform signal based measurements of a sample by using the sub-array as a unit cell for sending and/or receiving signal pulses and/or receiving signals.

The sensing and/or actuating elements of a sub-array work as a combined "functional unit", collecting 1D depth data sets by controlling the sending of an signal pulse and collecting reflected signals from a sample, e.g., from inside a patient's body.

Also, the system may be configured to generate 3D spatial information from 1D data sets collected by the electronic array, or one or more sub-arrays of the electronic array.

The system may be configured to determine a position for a sub-array within the electronic array such that it is not hindered by impediments for signal beams, e.g., due to obstacles. To collect data in order to generate, e.g., 3D spatial information, the control unit may be configured to control, for each sub-array, the location of the sub-array, as well as the focus depth and/or a steering angle for the sub-array depending on a chosen region of interest, e.g., within a patient's body.

In particular, the size and pitch of the sensing and/or actuating elements may be adjusted to the wavelength, which is used for the ultrasound, i.e., the sound wave length (lambda). Herein, the pitch denotes the spacing from the center of one transducer array element to the neighboring sensing and/or actuating element. The signals, as they are emitted from (or received by) these sensing and/or actuating elements interfere differently for different pitch values.

For controlling a sub-array of sensing and/or actuating elements in order to perform imaging, and, e.g., for measuring 3D spatial information, a positioning of the sub-array position is determined and controlled within the plurality of sensing and/ or actuating elements. This may be carried out by controlling a signal path between a switching array, which is arranged to transmit control signals to the sensing and/or actuating elements and/or to transmit reading signals from the sensing and/or actuating elements, and the control unit of the system, which may be arranged on the periphery of the sensor. The control unit, especially in combination with other elements or parts of the overall system, and a respective driver module for the switches, may be configured to selectively switch rows and/or columns of sensing and/or actuating elements to define an active sub-array and a sub-array location in a larger matrix of the system's electronic array.

The complexity of the system may be defined as a characteristic in different ways. In particular, the complexity measures the number of individually driven functional units. For example, the "complexity" of the system may refer to the total amount of channels, which are used for generating signal pulses and/or for receiving signals.

The sub-array size is chosen and configured such that a suitable signal-to-noise ratio, a specific beam profile and/or a required image quality can be achieved. For example, when a certain sub-array size SA, where SA is the product of the number of rows "n" and columns "m" (SA = n*m), is chosen, this may reduce the complexity of the system significantly.

In an embodiment, the sub-array definition module is configured to define the plurality of sub-arrays such that there is no overlap between the sensing and/or actuating elements of separate sub-arrays. In other words, sensing and/or actuating elements are not "shared" among different sub-arrays, i.e., attributed to several sub-arrays, but only attributed to one or none of the sub-arrays. The electronic array can therefore advantageously be controlled in a very simple and efficient manner.

In an embodiment, the system comprises at least two electronic arrays forming a least one electronic array set; and the control unit is configured to control the electronic array set as one single electronic array. By using an electronic array set for example several positions can be monitored (e.g. needed for lung monitoring) by means of one system. Further, a greater surface area can be monitored. Also, different viewpoints for monitoring a target, which can be an organ, fluid carrying structure or other volumetric feature in the body, e.g. the heart and/or lung and/or chest can be established.

Several electronic array's may be combined in series and/or in parallel into a single functional unit, i.e., a single electronic array set, which is driven as a single electronic array of the electronic system.

Different architectures may be used to address sensing and/or actuating elements individually or combined in functional units. In a row-column based architecture, for example, sensing and/or actuating elements that are arranged in one dimension are combined and treated as a functional unit. Such elements in one dimension may be arranged along an essentially straight line. For example, instead of controlling the single elements of an electronic array individually and/or collecting signals from all sensing and/or actuating elements, all elements along one axis may be combined into a single input and/or output. For example, all elements of one row or column are combined. Connecting a sensing and/or actuating element to a control element configured as a switch, allows to selectively connect a sensing and/or actuating element to the row or column, so that a sub-selection can be made of the active sensing and/or actuating elements along a single row or column. The pulsers and receivers for driving respectively reading the combined sensing and/or actuating elements can each be connected to either the rows or columns of the array or a combination thereof; leading to possible configurations in the read-out electronics which we designate as row/row, column/column or row/column read-out schemes.

In an embodiment, the system is configured such that the electronic array is controlled according to a row/column-based architecture. This allows advantageously to reduce the data complexity greatly. The row/column architecture may be implemented by the specific electronic array architecture, or it may be implemented by how the control unit drives the electronic array, in which case the row or column configuration may be set by the control unit.

In a row/column-based architecture, the sensing and/or actuating elements that are arranged along the same row or column are connected together and addressed as a single functional unit. This combination of single sensing and/or actuating elements reduces the complexity from N*M (when each single sensing and/or actuating element is controlled individually) to N+M, wherein N and M represents the number of rows and columns present in the electronic array. Connecting a sensing and/or actuating element to a control element configured as a switch, allows to selectively connect a sensing and/or actuating element to the row or column, so that a subselection can be made of the active sensing and/or actuating elements along a single row or column.

Herein, each row/column unit may still consist of multiple interconnect lines forming the connections between external nodes and internal sensing and/or actuating elements. Each interconnect line may herein carry a different signal, e.g., to provide a signal line, a ground line or to provide a control signal for switching.

In particular, the elements of one row or column may be combined in different ways. For example, data of these elements as sensors may be virtually combined into one channel by a suitable control by the control unit, or the row/column architecture may be implemented by the design of the electronic array itself, e.g., by performing an integration step directly on the sensing and/or actuating element level. A row/column configuration may also be implemented by a suitable chip design.

In an embodiment, the system is configured such that a sub-array size is provided, sub-arrays of the sub-array size are defined and the electronic array is controlled based on the individual sub-arrays. The sub-arrays can therefore advantageously be defined very precisely and adjusted to different conditions.

The value of sub-array size may be determined or given in different ways, for example in a dynamic determination step, in which an optimum sub-array size is determined depending on parameters like free computing capacity, signal-to-noise ratio or accuracy values, geometric properties of an object or of the electronic array, or calibration values, which may be determined or measured in a calibration step. In particular, the sub-array size is determined beforehand through system studies. Considerations may be, for example, the signal to noise ratio of the return signal and the profile, including parameters such as beam spreading and focus beam width.

In an embodiment, the sensing and/or actuating elements of each sub-array are configured to provide an analog sensor signal and the sensor signals of the sensing and/or actuating elements of each sub-array are provided to one common analog-digital converter (ADC). In particular, the individual signals of the transducer array elements of one sub-array are combined first, before they are provided to the ADC. This leads advantageously to a reduced complexity.

For example, there may be one ADC per row or per column in a row/column architecture. The ADC may be comprised by the data processing unit or implemented as separate units. By providing the detected signals of a sub-array of sensing and/or actuating elements to one ADC, only one digital signal is produced and the amount of data that is acquired is reduced.

The number of analog-digital converters that are needed by the system is reduced from one per receive channel to one per sub-array, thus also reducing the amount of data that is generated. Consequently, significant benefits in power consumption and data rate may be reached.

In an embodiment, the system is configured to filter data received from the electronic array and to obtain filtered data with a reduced spatial and/or temporal resolution. This leads advantageously to a reduced amount of data to be treated. The filtering may be carried out by the data processing module and/or by other modules and units.

Different filter circuits and/or algorithms may be applied to reduce the amount of data that needs to be provided by the system. For example, a sampling rate may be adjusted by hardware and/or software measures such that measurements are only carried out at the time points that are actually needed. Also, the spatial resolution of measurements and scans may be adjusted to suitable values, e.g., depending on data processing capabilities, power consumption requirements or quality requirements for a subsequent data.

Also, the invention relates to a method for operating an electronic system. Herein, a plurality of sub-arrays is defined within an electronic array. The individual sub-arrays are controlled as functional units for sending signal pulses and/or receiving signals.

In particular, the method serves the purpose of operating the electronic system. Thus, it has the same advantages as the electronic system of the invention.

Further details and advantages of the present invention shall now be disclosed in the connection with the drawings.

It is shown in
- **Fig. 1**: an embodiment of the electronic system;
- **Fig. 2A-D**: detailed views of the electronic array of the embodiment of the electronic system;
- **Fig. 3**: the embodiment of the electronic system as shown in **Fig. 1****;**
- **Fig. 4**: an embodiment of a method to operate the electronic system;

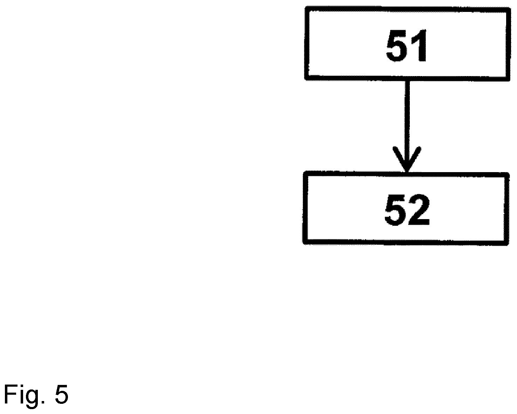

- **Fig. 5**: schematic representation of a possible embodiment of the volume reconstruction procedure performed by the electronic system according to **Fig. 1****;**
- **Fig. 6**: a flowchart of a possible embodiments of beamforming with a beam former module of an electronic system according to the present invention in form of a send beam-former;
- **Fig. 7**: a schematic representation of a possible embodiment of the beamforming according to **Fig. 7****;**
- **Fig. 8A-B**: a representation of steered beams created by the beam former module of **Fig. 7****;**
- **Fig. 9**: a flowchart of a possible embodiments of beamforming with a beam former module of an electronic system according to the present invention in form of a receive beam-former;
- **Fig. 10**: a schematic representation of a possible embodiment of the beamforming according to **Fig. 9****;**
- **Fig. 11**: a schematic representation of a possible embodiment of the beamforming according to **Fig. 9** with an envelope detection module;
- **Fig. 12**: a schematic representation of a possible embodiment of the beamforming according to **Fig. 9** with an apodization module;
- **Fig. 13**: a possible embodiment of passing signals between beam former modules of an electronic system according to the present invention with periphery circuitry;
- **Fig. 14**: a possible embodiment of passing signals between beam former modules of an electronic system according to the present invention without periphery circuitry;

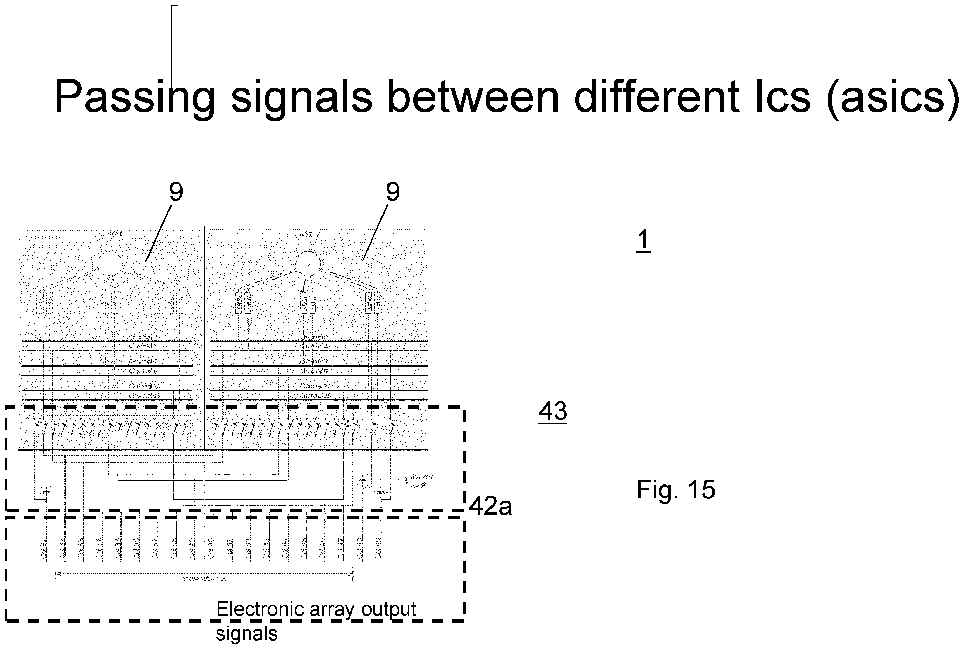

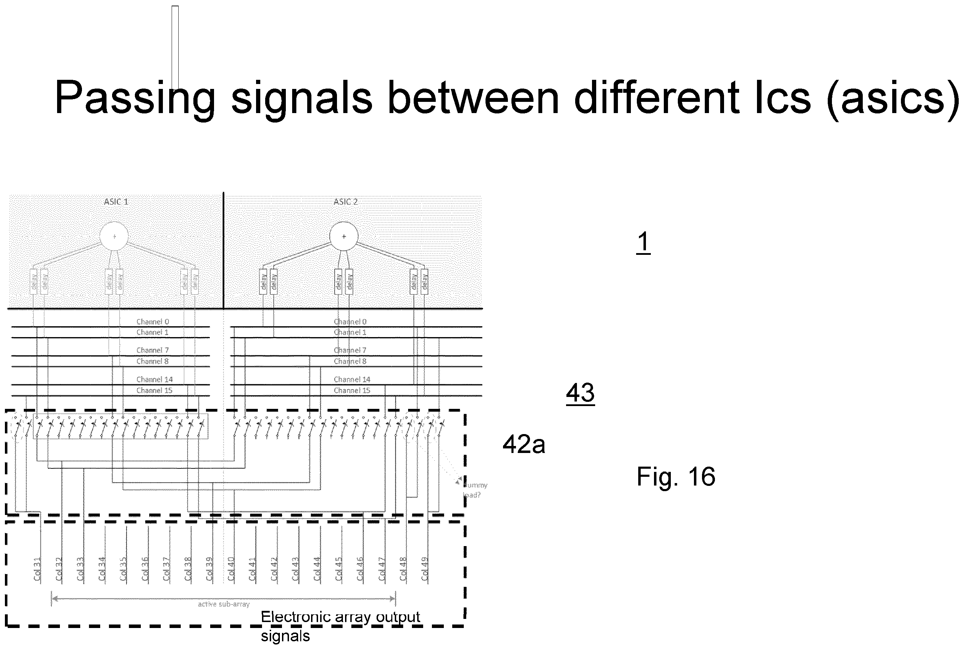

- **Fig. 15**: a possible embodiment of passing signals between beam former modules of an electronic system according to the present invention, here between different ICs (ASICs), wherein the channel select module as part of the subarray definition module is partially implemented in the ICs (ASICs);**Fig. 16** a possible embodiment of passing signals between beam former modules of an electronic system according to the present invention, here between different ICs (ASICs), wherein the channel select module as part of the subarray definition module is implemented in the periphery of the electronic array;
- **Fig. 17**: a possible embodiment of interleaving channels;
- **Fig. 18**: a flowchart for operating a possible embodiment of a dual stage beam former module; and
- **Fig. 19**: a possible embodiment of a two-stage beam former module.

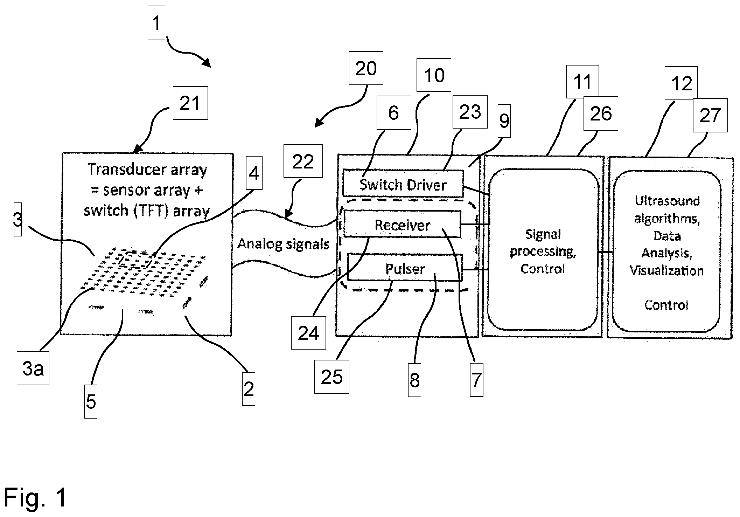

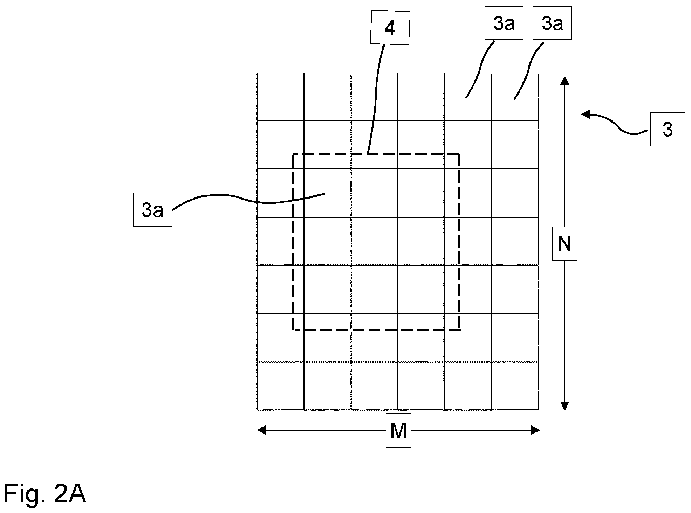

**Fig. 1** and **Fig. 2A** to **Fig. 2C** show an embodiment of the electronic system for monitoring of physiological parameters.

**Fig. 1** shows a schematical overview and explaining the functional blocks of the electronic system 1.

The electronic system 1 according to the embodiment is configured as a wearable electronic system 1, in particular for long-term monitoring of a patient's physiological parameters.

In particular, the electronic system can be in general an electronic system as disclosed by WO 2019/162485 A1. The below additional features can be further realized in this already disclosed electronic system of WO 2019/162485 A1.

In the embodiment as shown in **Fig. 1**, the electronic system is (at least partially) carried in a patch 2.

The electronic system 1 comprises an electronic array 3.

The electronic array 3 comprises a plurality of sensing and/ or actuating elements 3a.

A subset of the sensing and/or actuating elements 3a forms a sub-array 4.

In particular, each sensing and/ or actuating element 3a can consist of one or several sub-elements 3b, which are driven as a single larger sensing and/or actuating "element" 3a.

Other configurations with different numbers of sub-elements 3b or a different arrangement of the sub-elements 3b are possible as well.

Furthermore, there is a switch array or switch module 5.

A further part of the electronic system 1 is the Analog Front-End 10 with the Switch Driver 6, the Receiver 7 and the Pulser 8.

The Receiver 7 can be embodied as analog-digital converter (ADC).

The Pulser 8 can be a pulser module.

There can be a digital application-specific integrated circuit 9.

Further, there is an interface module 11 and an external unit 12/back-end unit 12.

A electronic array 21, which comprises a sensor array (e.g., like the electronic array 3 described above) and a switch array, is coupled with a unit implementing a switch driver 23, a receiver 24 and a pulser unit 25.

These units are configured to communicate via analog signals 22 with the electronic array 21.

In the embodiment, they are implemented in application-specific integrated circuits. Such circuits can be located on the periphery of the sensor or on the Analog Front-End 10.

Also, they are used to receive and treat the signals, and communicate with a signal processing/control unit 26, which is implemented in an embedded computer system, e.g. on the Analog Front-End 10 with CPU, FPGA with memory or other units, these control and signal processing algorithms might also be implemented partly or completely in an application-specific integrated circuit.

Further processing of provided data is performed by a control module 27, incorporating for example sensor signal reconstruction algorithms, data analysis, visualization and control algorithms.

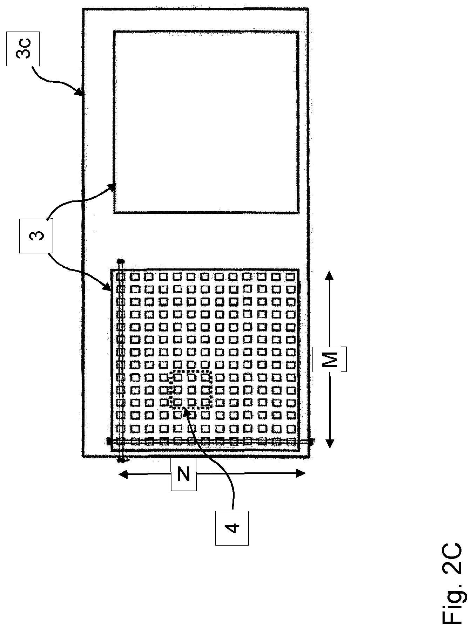

Furthermore, **Fig. 2C** shows another embodiment, wherein two or more electronic arrays 3 can form an electronic array set 3c, which is then controlled as one functional unit, i.e. "virtual" single electronic array.

In the embodiment of **Fig. 2C**, a first and a second electronic array 3 are comprised by one electronic array set 3c. In this embodiment, the electronic array set 3c is controlled as "virtually" one single electronic array 3.

Also, **Fig. 2C** shows that the electronic array 3 comprises a plurality of sensing and/ or actuating elements 3a, which are arranged in a matrix with a number of N rows and M columns.

Furthermore, **Fig. 2C** shows that a subset of the sensing and/ or actuating elements 3a make up a sub-array 4, which is herein controlled as one unit. The sub-array 4 has a number of n rows and m columns.

**Fig. 2C** also shows that elements 3a along a row and/or a column of the electronic array 3 are interconnected with one or more interconnecting lines, a so-called row/column-based architecture. The elements 3a connect in parallel to the interconnects, with a switch, determining if an element 3a is connected or not and to which signal path it connects. Thus, rows and/or columns of the electronic array 3 can be controlled together. This allows simplifying the system by switching rows and/or columns of elements 3a together.

The electronic array 3 of the embodiment is flexible. Here, the sensing and/or actuating elements elements 3a are arranged on a flexible substrate, e.g., comprising a flexible polymer material.

Furthermore, the electronic system 1 comprises a switch array which can be embodied as a transistor array 5, comprising a plurality of transistor elements.

The switch array 5 is arranged such that its switch elements (control corresponding sensing and/ or actuating elements 3a.

In the present embodiment, a switch array 5 with 150 * 150 transistor elements is used, which are arranged in a 2D matrix with perpendicular rows and columns. The array size depends in particular on the size of the respective electronic array 3, and it may differ in different embodiments.

In particular, the transistor array 5 can be arranged on the same substrate as the electronic array 3.

In particular, "Heterogeneous Integration (HI)" may refer to the assembly and packaging of multiple separately manufactured components onto a single chip in order to improve functionality and enhance operating characteristics. In the present embodiment, one single array is created with a single functionality (sensing), implying a monolithic device.

In particular, attention is drawn to **Fig. 2C**, wherein an example of a row/column architecture is demonstrated.

In the embodiment, both the electronic array 3 and the transistor array 5 are integrated into an adhesive patch 2.

In the embodiment, the adhesive patch 2 has a size of about 10x10 cm. The size may vary in different embodiments.

The adhesive patch 2 comprises a material that is suitable for the purpose of attaching the electronic system 1 and in particular the electronic array 3 to a patient's skin. Therefore, biocompatible and breathable materials are used. The adhesive layer on the patch is used to attach the patch to the body and to make sure that the position of the electronic array 3 is essentially constant with respect to the patient's skin.

The system 1 also comprises a functional block for the analog control of the electronics, a so called Analog Front-End.

The Analog Front-End 10 is coupled with the electronic array 3 and the transistor array 5 for providing options such as control and read-out for the electronic array 3 and/or the transistor array 5. To this end, both data and electrical power may be transferred over the coupling between the Analog Front-End 10 and the patch 2 with electronic array 3 and Transistor array 5.

Here, a transistor driver module 6 is provided on the Analog Front End 10, which is configured to provide a low-level interface to control and manage the Transistor array 5 and its individual transistor elements, respectively.

Also, a receiver 7 is provided as part of the analog-front end 10, which is configured to convert an analog input signal to a digital output signal.

Also, a pulser module 8 is provided as part of the analog front end 10, which is configured to control the electronic array 3 such that signal pulses are generated. In particular, a beam-forming is performed here. Delay values may be set individually for each pulser unit of the system 1 that generates an signal pulse. The delays on the different channels, in particular each sensing and/ or actuating element 3a, of the pulser unit will determine the focusing and the beam profile.

Also, a digital middle-end is provided , which is configured to perform part of the control operations for the electronic system 1, and specifically to control the activity of the electronic array 3 and the transistor array 5 for generating signal pulses and detecting signals. The digital middle-end is also configured to perform signal processing on the signals received from the analog front-end.

As part of the digital middle end, microprocessors may be provided and/or other units for performing operations for controlling the electronic system 1 and its electronic components.

Thus, the electronic system 1 of the embodiment provides an easily customized sensor and monitoring device.

The interface module provides the possibility to build up a connection based on a wire connection and/or a wireless connection. In the present embodiment, examples for connection methods include USB and Ethernet as well as via Bluetooth and WiFi networks.

The interface module is here configured to allow for data communication and/or power connections with external units.

In the embodiment, the PCB with its components and the transistor array 5 constitute an integrated control unit and data processing unit. PCB and transistor array 5, and the electronic array 3, may in different embodiments, be configured as units that are formed separately or they may be incorporated in a common unit.

The system 1 is configured to monitor physiological parameters such as cardiac function over time. For example, such an electronic system 1 can be embodied as monitoring and/or actuating system with a plurality of sensors, such as electrodes, ultrasound sensors, mini-cameras, light-emitting elements and the like. The electronic system 1 can be body worn in a patch type format. If the system 1 is configured for cardiac monitoring, which may for example comprise monitoring of cardiac activity and/or cardiac properties of a patient. Monitoring cardiac activity may comprise monitoring of parameters such as cardiac rhythm and/or cardiac output.

Turning to **Fig. 2A****,** a detailed view of the electronic array 3 of the embodiment of the electronic system 1 is described.

The electronic array 3 has a matrix of sensing and/ or actuating elements 3a, which are only schematically shown in a small number.

The system 1 is configured such that a sub-array 4 of sensing and/ or actuating elements 3a may be defined. The elements 3a of a sub-array 4 are treated as one functional unit for generating signal pulses and/or detecting signals.

In the embodiment, an control circuit performs steps for defining sub-arrays 4 within the electronic array 3. The definition of sub-arrays 4 may be carried out in different ways, e.g., by way of the chip design or by other units controlling the electronic array 3.

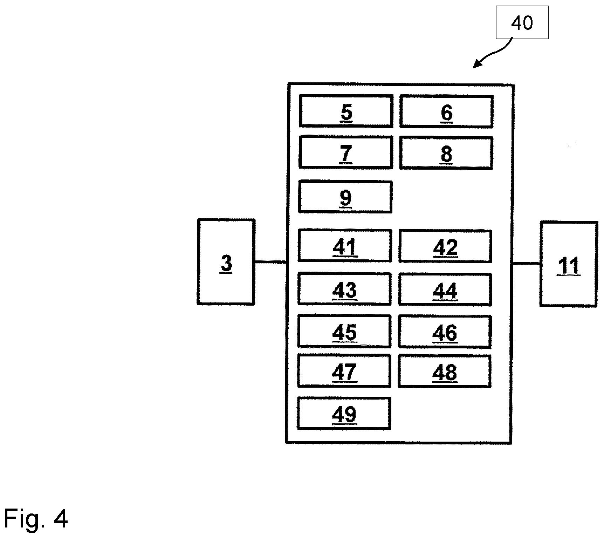

In the present embodiment, the electronic array 3 has between N=75-200 rows and M=75-200 columns, which are ordered in a two-dimensional matrix. On the other hand, a sub-array size value of 4 to 32 rows by 4 to 32 columns is defined. Thus, groups of 162 elements 3a are grouped into one sub-array 4. This leads to a considerable reduction in system complexity and data volume, respectively. This aspect is further described below with reference to **Fig. 4****.**

Herein, the interrelated elements 3a are chose such that they are neighboring to each other.

In further embodiments, this definition of sub-arrays 4 may be configured in different ways, such as, in a configuration step, by inputting a predetermined sub-array size value, which defines the number of sensing and/ or actuating elements 3a to be included in a sub-array 4, and/or by inputting a location of a sub-array 4 within the electronic array 3. Also, the form of a sub-array 4, i.e., its dimensions size, may be determined by an input value.

In one embodiment, the sub-array size may be defined during the system development. In the products itself, the sub-array size can be fixed, without an option to dynamically reconfigure this value; in this case, a fixed size would be used.

Said values to control how sub-arrays 4 are defined may also be determined by the digital Middle End and/or digital back-end, part of this functionality might be implemented in an ASIC or another control element of the electronic system 1, or by an input over the interface module, in particular depending on an algorithm. Such an algorithm for determining parameters for defining the sub-arrays 4 may use input values such as data/image quality requirements, a signal-to-noise ratio, information about factors interfering with the operation of the system, user input and configuration information, and/or other parameters.

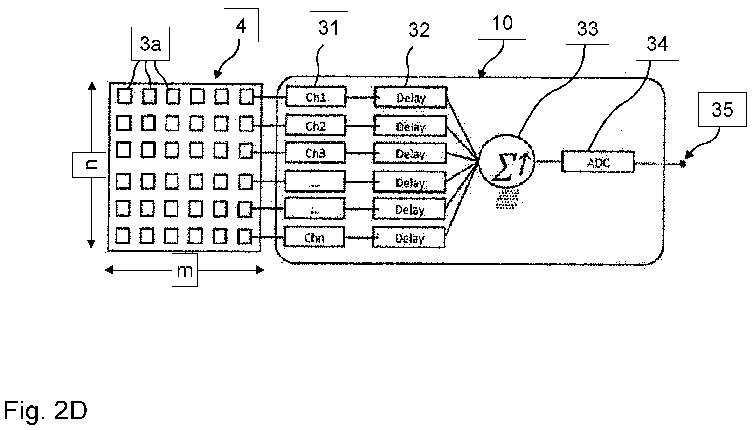

Turning to **Fig. 2D****,** an embodiment for implementing a row/column based micro hardware beam-former is schematically described.

A sub-array 4 has a number of n row and m columns, and is connected to a micro hardware beam-former 30. In this specific case, the n rows of transducer array elements 3a are combined into one output channel 31 each. These output channels are named "Ch1" to "Chn".

For the transducer array element 3a of the sub-array 4, the micro hardware beam-former 30 combines the n analog input channels 31 from the sub-array 4 into one single digital output channel 35.

To this end, a delay operation is performed by delay units 32 and a sum unit 32 is subsequently used to coherently add the n analog inputs together. An analog-digital converter 34 is used to convert the resulting analog signal to a digital signal, which is output through a digital output channel 35.

In further embodiments, each channel 31 can do some analog processing of the input signals before its signal is combined in the analog beam-former 30.

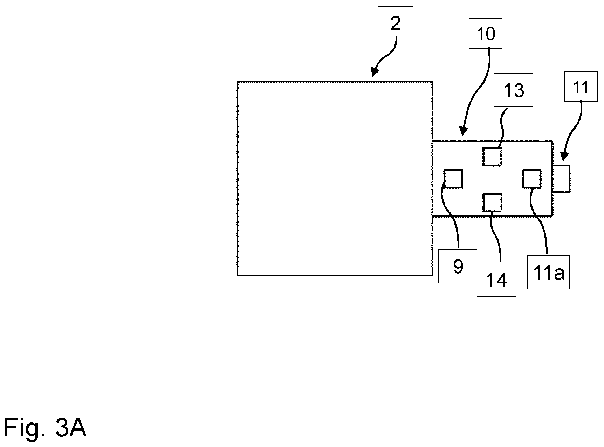

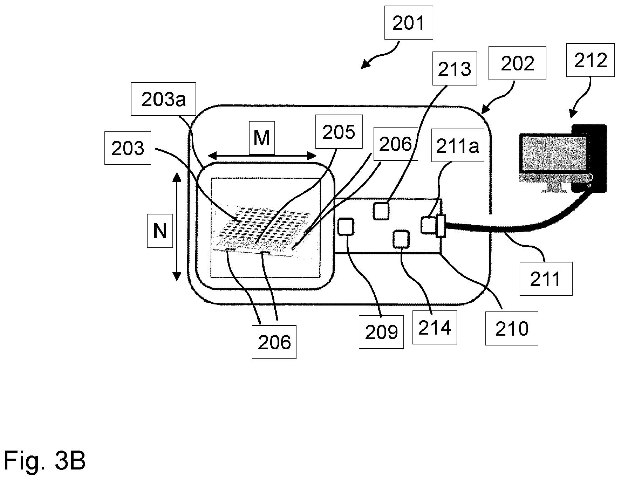

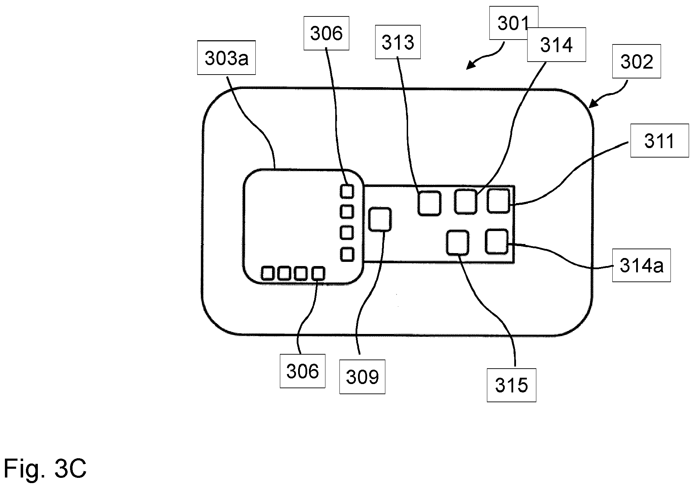

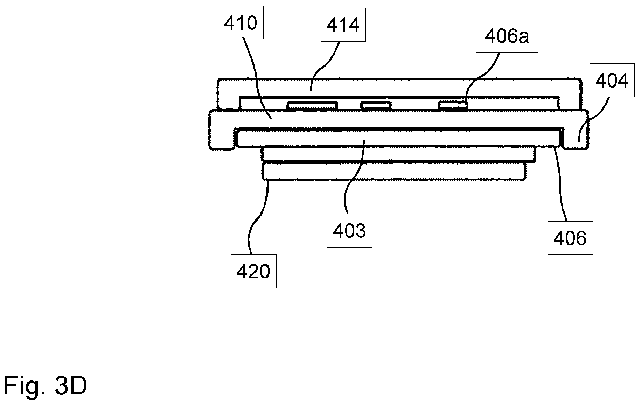

In **Fig. 3****,** a schematic view of another embodiment is shown. The shown components may also be present in the embodiments described above; similar or equivalent elements have the same reference numerals and are not described again in detail.

Some or all of the elements and modules shown in **Fig. 3** may be implemented in different units, such as separately formed devices, or they may be implemented by way of program modules within the same computational unit and/or a digital memory device.

The combination of elements and modules of this embodiment is to be understood as exemplary, and as comprising a large number of optional features, which are not necessarily linked to each other or to be combined in one embodiment of the invention.

In **Fig. 3****,** the electronic array 3 is shown, which is linked to a control unit 40 (controlling the electronic array 3), which may be configured at least partially on a PCB 10.

The connection between the electronic array 3 and the control unit 40 is a direct and cable-bound connection. However, in an alternative embodiment, an indirect and/or wireless connection is possible.

For instance, the control unit 40 can be attached to the patch 2 (possible for wireless patches and wired patches). Further, there can be an additional control unit in a separate computer, in particular for the wired version.

The electronic array 3, configured for providing signals (or signal pulses) and/or receiving ultrasound signals, comprises a plurality of sensing and/or actuating elements 3a.

The control unit 40 comprises the transistor array 5, which was already described above.

The control unit 40 further comprises a dedicated data processing unit 41, which may in different embodiments comprise some of the other modules (as specified below with reference numerals 41 to 49) or which may in different embodiments be implemented by several individual modules. The data processing unit 41 receives and processes data from the electronic array 3.

Moreover, the control unit 40 comprises a reference module 45.

Also, the control unit 40 comprises a sub-array definition module 42.

Combining of groups of sensing and/ or actuating elements 3a into a sub-array 4 can alternatively be done by the sub-array definition module 42.

Also, the sub-array definition module 42 may be implemented as a software module, comprising instructions for computational operations that implement the function of sub-array definition. Such a software module may in particular be implemented together with the control unit 40.

Specifically, the sub-array definition module 42 may be structural and/or functional or integrated as integral part, at least partially, by the control unit 40 and/or by the data processing unit 41.

As shown in **Fig. 3****,** the electronic system 1, in particular for cardiac monitoring, comprises an electronic array 3 with a plurality of sensing and/ or actuating elements 3a, a control unit 40, which is coupled to the electronic array 3, for controlling the electronic array 3, and a data processing unit 41 for receiving data from the electronic array 3 and processing the received data. Therein, the electronic system 1 further comprises a sub-array definition module 42, which is configured to define at least one sub-array 4 of sensing and/or actuating elements 3a and to control the at least one sub-array 4 as a functional unit for sending at least one signal pulse and/or receiving at least one signal.

In **Fig. 4****,** a method for operating the electronic system 1 is described. The following description is based on the embodiment of the electronic system 1 described above with reference to, e.g., **Fig. 3****,** but other embodiments of the electronic system 1 may be suited as well.

In this context, "sub-array definition" denotes a reduction of the amount of read and/or write channels needed to address the sensors, in particular the sensing and/ or actuating elements 3a or a sub-array 4.

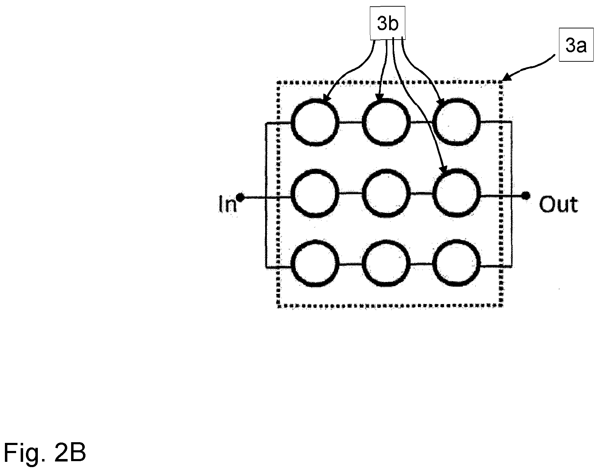

This can be reached by connecting elements together in a row/column architecture, leading to a sub-array definition from N*M to (N+M) (cf. **Fig. 2B****);**
c) driving a sub-array 4 instead of the full electronic array 3 at once, leading to a sub-array definition from (N+M) to (n+m); and/or
d) using a hardware beam-former to combine the n (or m) analog input channels 31 of a sub-array 4 into a single digital input channel 35 (cf. **Fig. 2C**).

In a step 51, a plurality of sub-arrays 4 is defined within the electronic array 3. In a subsequent step 52, the individual sub-arrays 4 are controlled as functional units for sending signal pulses and/or receiving signals.

In the system of the embodiment, the steps 51, 52 are performed by the sub-array definition module 42, which is comprised by the control unit 40 of the electronic system 1. Herein, the sub-array definition module 42 is configured to control other units and modules, especially the transistor driver module 6, the receiver module 7, and/or the pulser module 8, depending on whether a send or a receive cycle is active.

The steps 51, 52 may be performed in a cyclic manner, i.e., they may be repeated for example at given intervals or triggered by predefined events and/or control signals.

In one embodiment, the system is configured such that the sub-array 4 is defined dynamically and may change its position.

In the present embodiment, the sub-arrays 4 are defined such that there is no overlap between the sensing and/ or actuating elements 3a of separate sub-arrays 4, i.e., no sensing and/ or actuating elements 3a are "shared" among different sub-arrays 4.

In another embodiment, an electronic array set 3c comprises at least two electronic arrays 3 and the control unit 40 is configured to control the electronic arrays 3 as one functional unit.

Also, in an embodiment, the electronic array 3 may be controlled according to a row/column-based architecture.

Furthermore, a sub-array size may be predetermined or provided or determined by an algorithm, and sub-arrays 4 of the sub-array size are defined based on this value. The electronic array 3 is then operated based on these individual sub-arrays 4.

Also, the sensing and/ or actuating elements 3a are controlled by the control unit 40, in particular via the transistor array 5. The sensing and/ or actuating elements 3a of each sub-array 4 detect an analog ultrasound sensor signal, and produce an analog signal. This analog signal is provided to the receiver module 7.

In particular, analog signals from the electronic array elements 3b of one sub-array 4 are processed by one common receiver module of the system 1. In further embodiments, different receiver modules 7 may be provided, e.g., in order to speed up data acquisition and processing.

Furthermore, a micro beam-forming architecture can be implemented by a hardware beam former module 43, such as a specialized control circuit element and/or another element of the control unit of the system 1.

Also, data may be filtered after it has been received from the electronic array 3. This may be carried out by a filter module 44, which may act on analog and/or digital signals. Depending on which filter is applied, filtered data is obtained with a reduced spatial and/or temporal resolution.

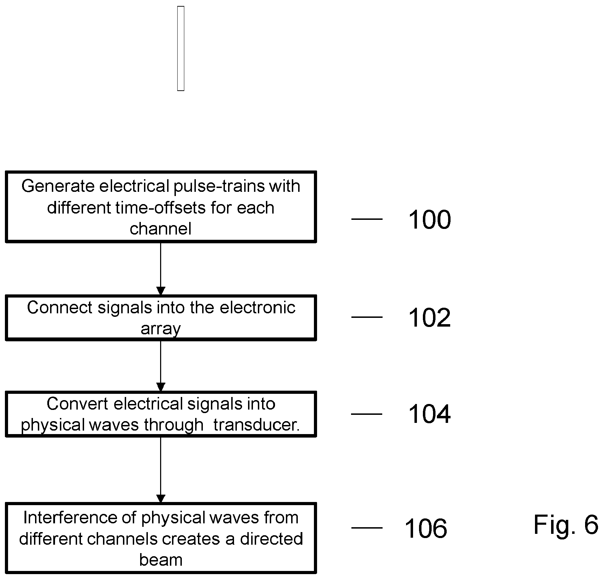

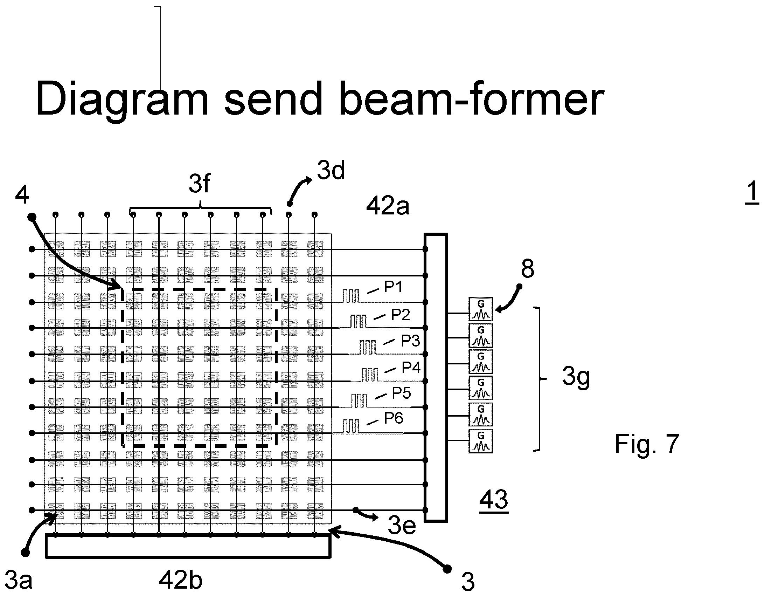

Further, the beam former module 43 is configured to apply a time delay to at least one of the sensing and/or actuating elements or a plurality of the sensing and/or actuating elements (cf. e.g. **Fig. 6** with step 100 "generate electrical pulse-trains with different time-offsets for each channel and **Fig. 7** with the delayed pulses).

The electronic system 1 further comprises a sub-array definition module 42, which is configured to define at least one sub-array 4 of sensing and/or actuating elements 3a.

The electronic system 1 is configured such that signals can be handed over between different beamformer modules, and further configured such that the sub-array definition module 42 is configured such that the at least one subarray 4 can be positioned at any arbitrary location in the larger electronic array 3 of the electronic system 1.

The electronic system 1 can be also embodied such that at least two beam former modules are provided and the electronic system 1 is further configured such that a partial beam-forming is done in separate beam former modules before combining the signal in a second stage beam-former.

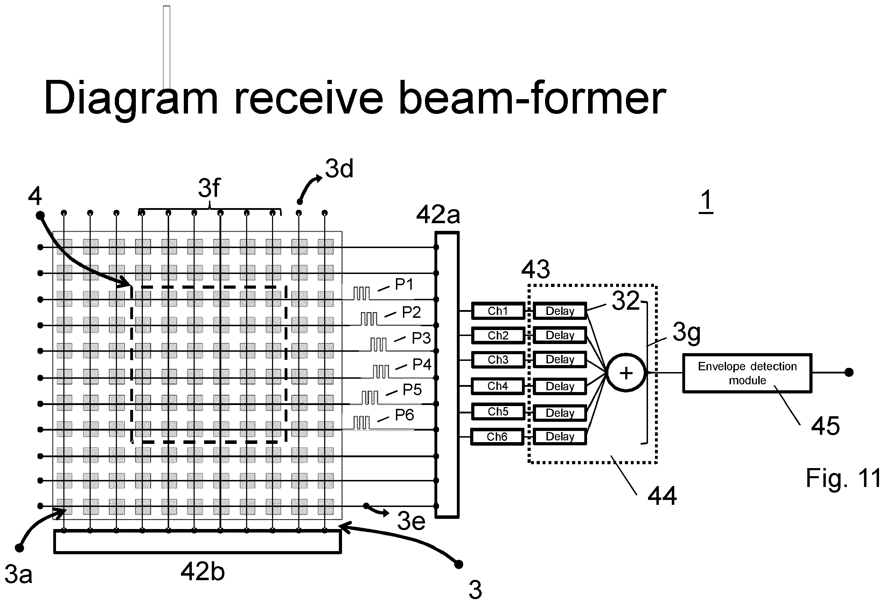

Also, the electronic system 1 comprises an envelope detection module (cf. also **Fig. 11**), wherein the envelop detection module is configured to reduce the data rate towards the digital parts of the electronic system 1, especially wherein the envelop detection module is implemented in the hardware and hardware-based.

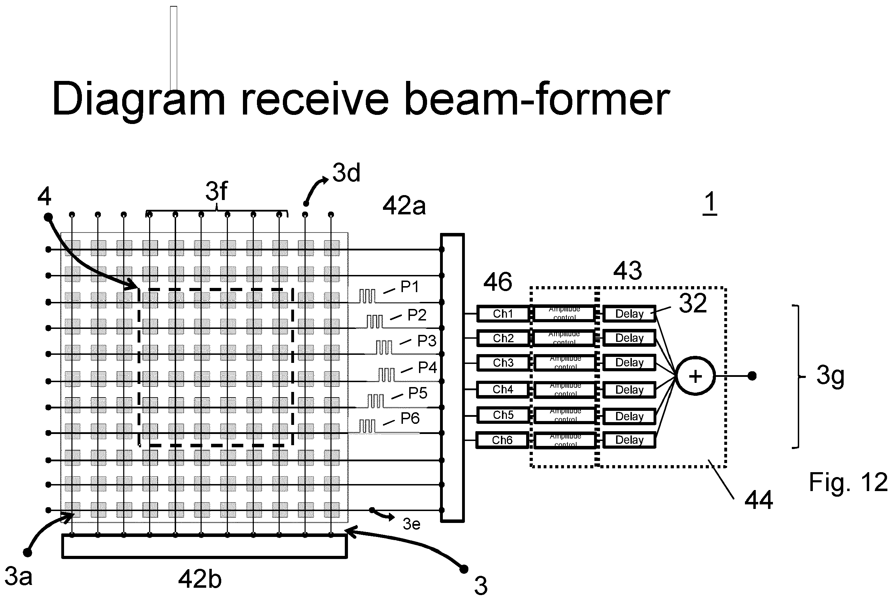

It is possible that the electronic system 1 further comprises an apodization module (cf. **Fig. 12**), wherein the apodization module is configured such that a hardware based apodization is performed before passing the signals into the beam-former.

The beam former module 43 is configured to drive the rows and columns of an electronic array

Further, the beam former module is implemented in at least one integrated circuit.

In another embodiment, a filter can be configured by adjusting filter properties. Thus, filters may be activated and deactivated, the impact of a filter on the data may be adjusted and/or a resolution of the filtered data may be adapted, e.g., to the needs for monitoring specific organs and functions, imaging purposes, or device-specific properties. **Fig. 6** shows a flowchart of a possible embodiment of beamforming with a beam former module 43 of an electronic system 1 according to the present invention in form of a send beam-former.

In a first possible step, i.e. step 100 the beam former module 43 generates electrical pulse-trains with different time-offsets for each channel.

In a second step, i.e. step 102 the signals are connected into the electronic array.

In a third step, i.e. step 104 the electrical signals are converted into physical waves through e.g. a transducer (in the embodiment with ultrasound, i.e. when a sensing and/or actuating element is embodied as (ultrasound) transducer).

In a fourth step, i.e. step 106 the interference of physical waves from different channels creates a directed beam.

**Fig. 7** shows a schematic representation of a possible embodiment of the beamforming according to **Fig. 6****.** The shown embodiment of the electronic system 1 with the beam former module 43 is configured and arranged to perform the method as shown and described in connection with **Fig. 6****.**

Several pulse generators, i.e. the pulser modules 8, are provided with a controllable time offset.

The pulser modules 8 can generate pulses, here depicted as pulses P1, P2, P3, P4, P5 and P6.

The pulser modules 8 are connected to the channel select module 42a as part of the sub-array definition module 42.

There are six pulser modules 8. Other numbers of pulser modules are possible. There could be also e.g. any other number from 1 to 100, preferably in the range of 1 to 20, e.g. 16 pulser modules (meaning that there are 16 channels).

Further, there is a column select module 42b as a part of the sub-array definition module 42.

Also, the electronic array 3 is shown, here consisting of a plurality of ultrasound transducers 3a as sensing and/or actuating elements 3a. Further, there is a column bus 3d and a row-bus 3e. The bus represents a collection of at least one electrical interconnect line.

The selected columns 3f and the selected rows 3g define the subarray 4 of transducers 3a.

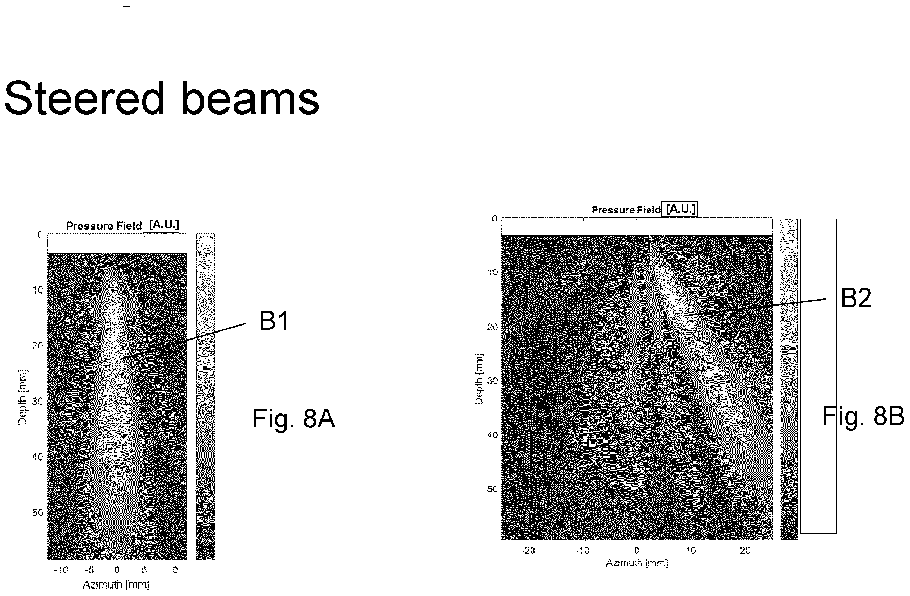

So, the plurality of sensing and/or actuating elements 3a are controlled by the beam former module 43, in such a way that the sensing and/or actuating elements generate ultrasound beam as shown in **Fig. 8A** or **Fig. 8B****.** A beam of signals sent out by the sensing and/or actuating elements 3a can be such that signals are only sent out by specific sensing and/or actuating elements, i.e. a selected number of sensing and/or actuating elements out of the whole number of sensing and/or actuating elements, here the subarray 4 of sensing and/or actuating elements 3a.

In particular, the beam former module 43 is configured to apply a time delay to at least one of the sensing and/or actuating elements 3a or a plurality of the sensing and/or actuating elements 3a, as can be seen in the pulses P1, P2, P3, P4, P5 and P6.

This allows advantageously easy control for high-resolution measurements and/or beam focusing and/or beam steering.

In particular, the time delay may be applied, when the plurality of sensing and/ or actuating elements 3a are used for sending ultrasound pulses P1, P2, P3, P4, P5, P6.

The time delay for an electronic array element or a plurality of sensing and/ or actuating elements may be defined relative to controlling other transducer array elements.

Also, the beam former module 43 and/or another unit of the system may be utilized to determine the delay. In particular, the delay is determined for each electronic array element or for a plurality of sensing and/ or actuating elements 3a, to which the determined delay is to be applied.

In particular, the beam former module 43 is configured to apply a time delay to at least one of the sensing and/or actuating elements 3a or a plurality of the sensing and/or actuating elements 3a.

This allows advantageously easy control for high-resolution measurements, beam focusing and/or beam steering.

**Fig. 8A** and **Fig. 8b** show a representation of steered beams created by the beam former module of **Fig. 7****.**

**Fig. 8A** shows a beam B1, which is propagating straight from its source.

**Fig. 8B** shows a beam B2, which is propagating with an angle from its source.

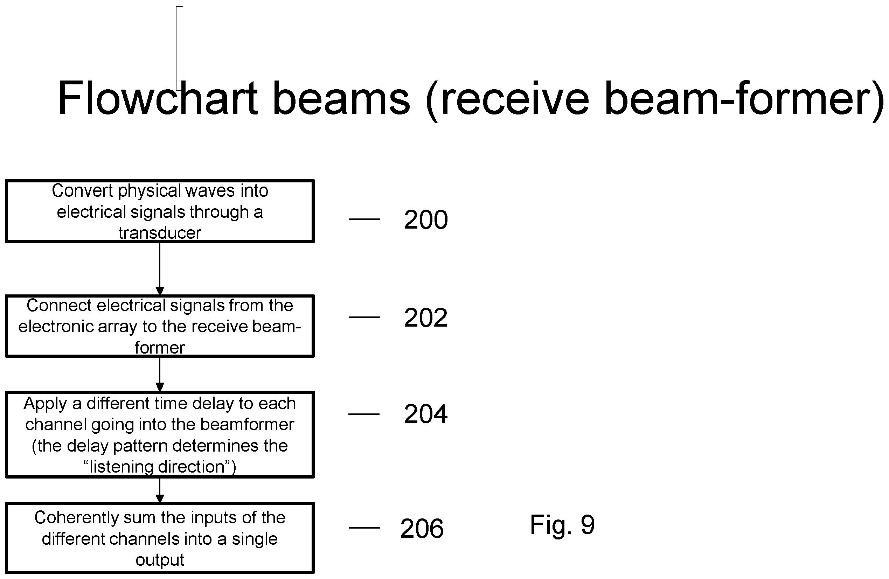

**Fig. 9** a flowchart of a possible embodiments of beamforming with a beam former module 43 of an electronic system 1 according to the present invention in form of a receive beam-former.

In a first possible step, i.e. step 200 the electrical signals are converted into physical waves through e.g. a transducer (in the embodiment with ultrasound, i.e. when a sensing and/or actuating element is embodied as (ultrasound) transducer).

In a second step, i.e. step 202 the electrical signals from the electronic array 3 are connected to the receive beam former (i.e. beam former module 43 with receive beam former functionality).

In a third step, i.e. step 204 a different time delay to each channel is applied by means of the delay elements 32, going into the beam former module. Here, the delay pattern determines the "listening direction".

In a fourth step, i.e. step 206 the inputs of the different channels are coherently summed (up) into a single output in the sum module 44.

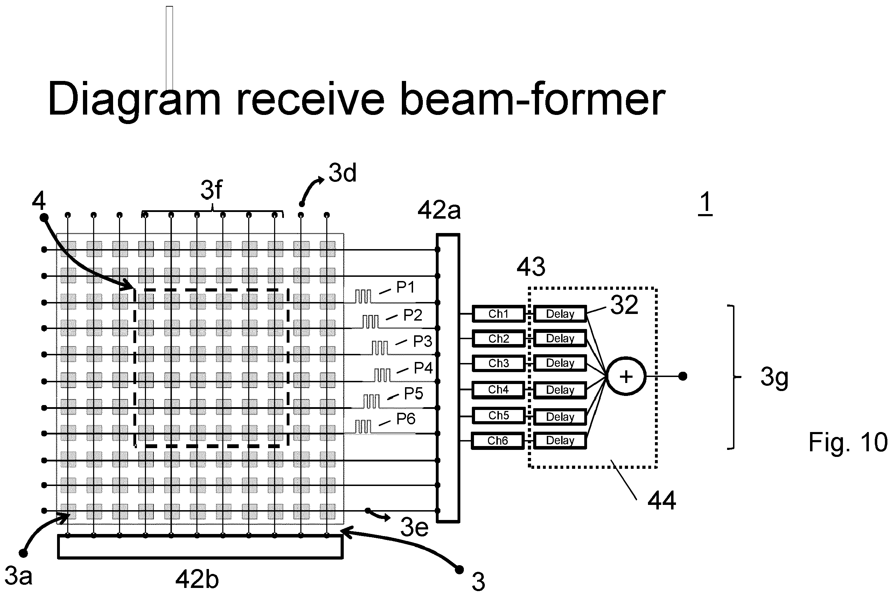

**Fig. 10** shows a schematic representation of a possible embodiment of the beamforming according to **Fig. 9** with a receive beam former module 43. Similar or identical components as shown in **Fig. 7** are denoted with the same reference number.

The shown embodiment of the electronic system 1 with the beam former module 43 is configured and arranged to perform the method as shown and described in connection with **Fig. 9****.**

Step 204 is performed with the delay elements 32.

Step 206 is performed with the sum module 44.

**Fig. 11** shows a schematic representation of a possible embodiment of the beamforming according to **Fig. 9** with a receive beam former module 43, which is equipped with an envelope detection module 45. Similar or identical components as shown in **Fig. 7** are denoted with the same reference number.

The shown embodiment of the electronic system 1 with the beam former module 43 is configured and arranged to perform the method as shown and described in connection with **Fig. 9****.**

A hardware-based beam-former 43 in the receive chain as shown in Fig. 11 is combined with a hardware-based envelope detection module 45 to further reduce the overall data-rate. The data-rate can be decreased by such an envelope detection module by eliminating the high frequency carrier and only leaving the lower frequency envelope data, which carries information. Envelope detection can be done through a combination of signal rectification (e.g. with a diode) and low pass filtering, through an IQ-demodulator or any other conceivable technique for signal demodulation.

**Fig. 12** shows a schematic representation of a possible embodiment of the beamforming according to **Fig. 9** **and** **Fig. 10** of the electronic system 1 with a receive beam former module 43, which is equipped with an apodization module 46. Similar or identical components as shown in **Fig. 7** are denoted with the same reference number.

It can also be equipped with an envelope detection module 45 (not shown).

The shown embodiment of the electronic system 1 with the beam former module 43 is configured and arranged to perform the method as shown and described in connection with **Fig. 9** or **Fig. 10** or **Fig. 11****.**

As shown, the electronic system 1 comprises an apodization module 46, wherein the apodization module 46 is configured such that a hardware based apodization is performed before passing the signals into the beam-former 43.

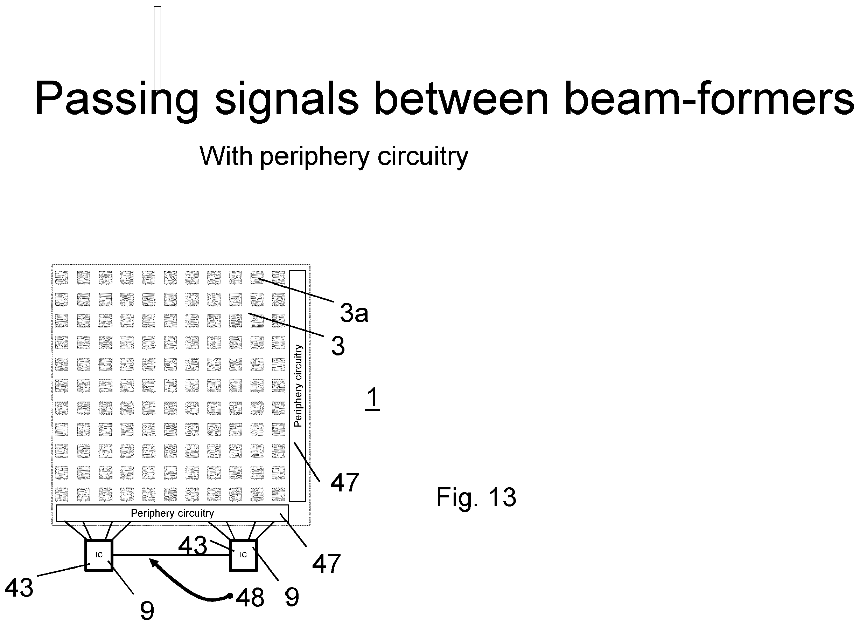

**Fig. 13** shows a possible embodiment of passing signals between beam former modules 43 of an electronic system 1 according to the present invention with periphery circuitries 47.

The electronic array 3 with the sensing and/or actuating elements 3a is connected with two periphery circuitries 47, located along the edges of the rows and columns.

As can be further seen, one periphery circuitry 47 is connected to two integrated circuits (ICs) 9.

The integrated circuits 9 are connected with a signal bus 48.

The signal bus 48 is configured to pass signals between beam former modules 43 in different ICs 9.

Signals are passed between the ICs 9 either before beamforming or after beamforming. If the signals are passed before beamforming, then the signals are passed over different domains to allow smooth positioning of the subarrays. If the signals are passed after the beamforming, then partially beamformed signals are sent to a second stage beam former module.

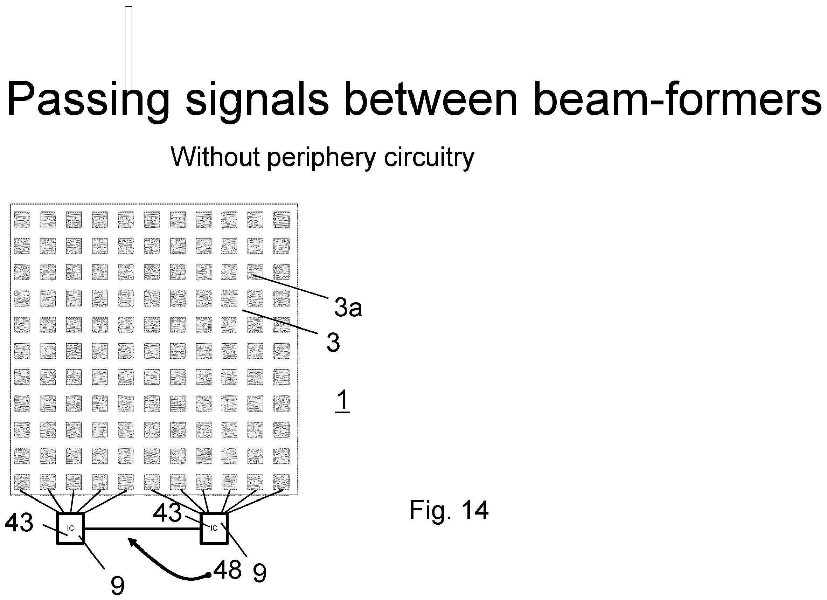

**Fig. 14** shows a possible embodiment of passing signals between beam former modules 43 of an electronic system 1 according to the present invention without a periphery circuitry 47 (as shown in the embodiment of **Fig. 13**).

The electronic array 3 with the sensing and/or actuating elements 3a is connected with two ICs 9 directly, i.e. without periphery circuitries 47 in between.

The integrated circuits 9 are connected with a signal bus 48.

The signal bus 48 is configured to pass signals between beam former modules 43 in different ICs 9.

Signals are passed between the ICs 9 either before beamforming or after beamforming. If the signals are passed before beamforming, then the signals are passed over different domains to allow smooth positioning of the subarrays. If the signals are passed after the beamforming, then partially beamformed signals are sent to a second stage beam former module.

**Fig. 15** shows a possible embodiment of passing signals between beam former modules 43 of an electronic system 1 according to the present invention, here between different ICs (ASICs) 9, wherein the channel select module 42a as part of the subarray definition module is partially implemented in the ICs (ASICs) 9. This embodiment can be implemented in any of the above described embodiments as shown and described in **Fig. 6** to **Fig. 14****.**

Passing of signals between different ICs 9 (ASICs 9) is performed as follows:
Output signals from the electronic array 3 are shared between different IC's 9 to allow smooth positioning of the sub-array position over the boundary.

In this implementation the channel select module 42a (part of the subarray definition module) is partially implemented in the IC's (ASIC) 9.

**Fig. 16** shows a possible embodiment of passing signals between beam former modules 43 of an electronic system 1 according to the present invention, here between different ICs (ASICs) 9, wherein the channel select module 42a as part of the subarray definition module is implemented in the periphery of the electronic array 3. This embodiment can be implemented in any of the above described embodiments as shown and described in **Fig. 6** to **Fig. 14****.**

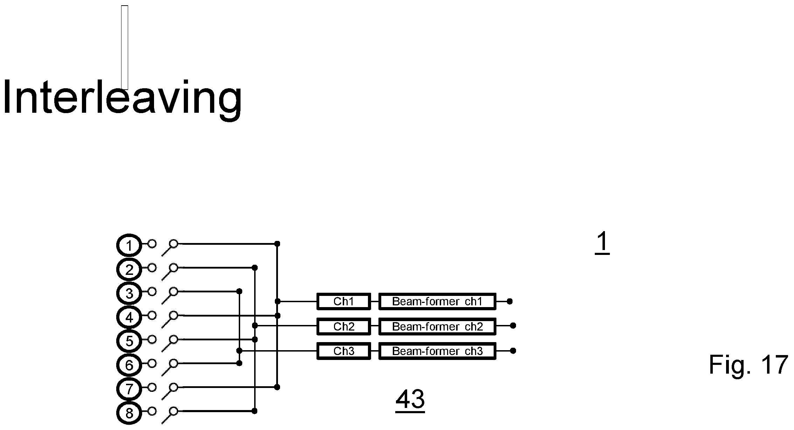

**Fig. 17** shows a possible embodiment of interleaving channels in the beam former module 43 of the electronic system 1.

Interleaving the channels allows to always connect three subsequent electronic array outputs to all N (3 in this example) AFE/beam-forming channels.

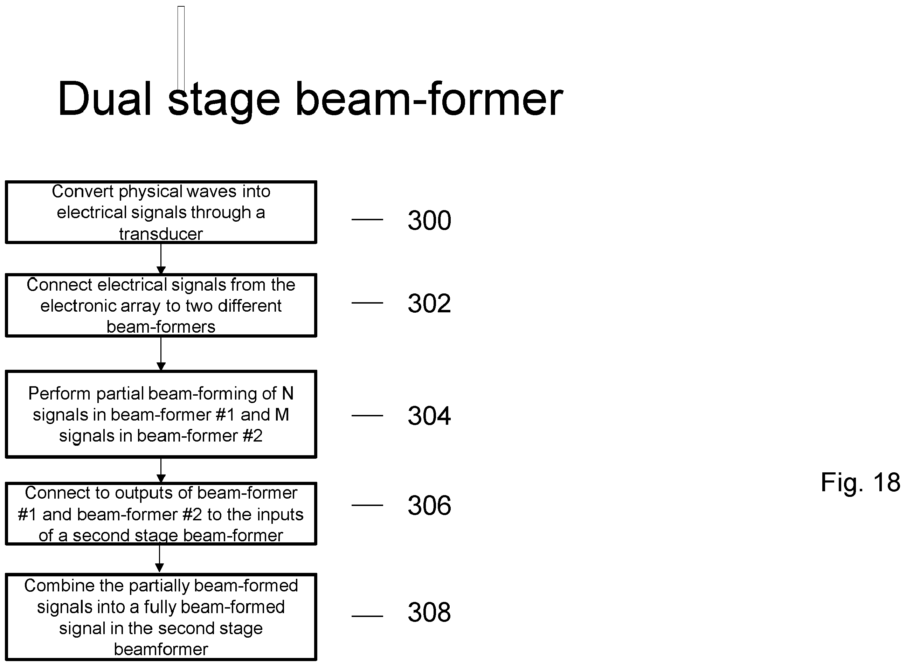

**Fig. 18** shows a flow chart of a possible embodiment and way of operation of a dual stage beam former module.

In a first possible step, i.e. step 300 the electrical system converts physical waves into electrical signals through a transducer.

In a second step, i.e. step 302 the signals are connected from the electronic array to two different beam former modules 43.

In a third step, i.e. step 304 a partial beam-forming of N signals is performed in a first beam former module 43 (1^{st} beam former module) and a partial beam-forming of M signals is performed in a second beam former module 43 (2^{nd} beam former module).

In a fourth step, i.e. step 306 the outputs of the first beam former module 43 (1^{st} beam former module) and the second beam former module 43 (2^{nd} beam former module) are connected to the inputs of a second stage beam former module 43.

In a fifth step, i.e. step 308 in the second stage beam former module 43 the partially beam-formed signals are combined into a fully beam-formed signal.

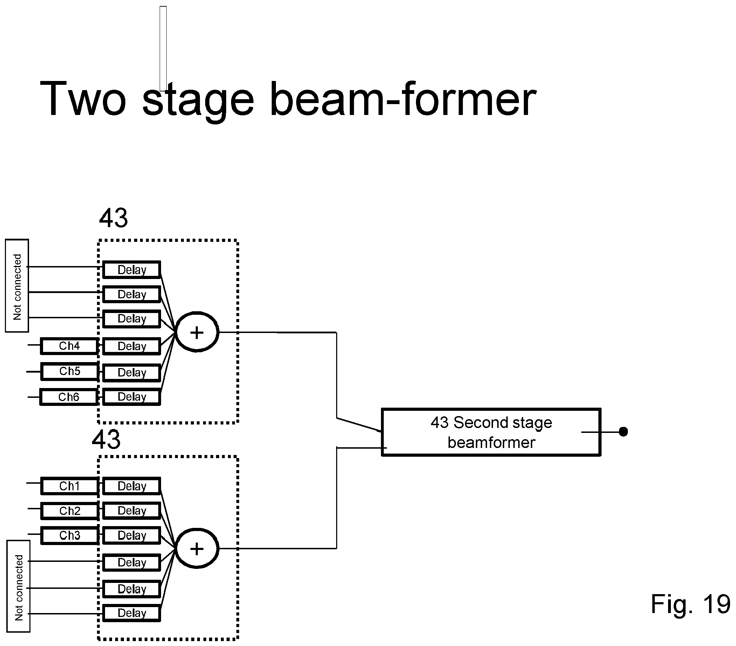

**Fig. 19** shows a possible embodiment of a two-stage beam former module. The shown embodiment of the electronic system 1 with the beam former modules 43 is configured and arranged to perform the method as shown and described in connection with **Fig. 18****.**

### Reference numerals

- 1: electronic system
- 2: adhesive patch
- 3: electronic array
- 3a: sensing and/or actuating elements
- 3b: sub-element;
- 3c: electronic array set
- 3d: column-bus (one or more signal lines)
- 3e: row-bus (one or more signal lines)
- 3f: selected columns
- 3g: selected rows
- 4: sub-array
- 5: transistor array
- 6: transistor driver module
- 7: analog-digital converter (ADC)
- 8: pulser module
- 9: digital application-specific integrated circuit (control circuit)
- 10: Analog Front-End
- 11: interface module
- 12: external unit; back-end unit
- 21: electronic array
- 22: analog signals
- 23: switch driver unit
- 24: receiver unit
- 25: pulser unit
- 26: signal processing; control unit
- 27: control module
- 30: micro beam-former
- 31: analog output channel
- 32: delay unit
- 33: sum unit
- 34: analog-digital converter (ADC)
- 35: digital output channel
- 40: control unit
- 41: data processing unit
- 42: sub-array definition module
- 42a: channel select module (part of the sub-array definition module)
- 42b: column select module (part of the sub-array definition module)
- 43: beam former module
- 44: sum module
- 45: envelope detection module
- 46: apodization module
- 47: periphery circuitry
- 48: signal bus
- 51: step
- 52: step
- 71: step
- 72: step
- 73: step
- 74: step
- 75: step
- 76: step
- 77: step
- 81: step
- 82: step
- 83: step
- 84: step
- 91: step
- 92: step
- 93: step
- 100: step
- 102: step
- 104: step
- 106: step
- 200: step
- 202: step
- 204: step
- 206: step
- 300: step
- 302: step
- 304: step
- 306: step
- 308: step
- N: number of rows
- M: number of columns

- P1: pulse
- P2: pulse
- P3: pulse
- P4: pulse
- P5: pulse
- P6: pulse

- Ch1: channel
- Ch2: channel
- Ch3: channel
- Ch4: channel
- Ch5: channel
- Ch6: channel

- B1: beam
- B2: beam

## Claims

1. An electronic system (1) comprising:
- an electronic array (3) of a plurality of sensing and/or actuating elements (3a);
- a control unit (40), which is coupled to the electronic array (3), for controlling the electronic array (3); and
- a data processing unit (41) for receiving data from the electronic array (3) and processing the received data;
wherein the electronic system (1) further comprises at least one beam former module (43); wherein the beam former module (43) is configured for addressing the plurality of sensing and/or actuating elements (3a) for forming a beam.

2. The electronic system (1) according to claim 1,
**characterized in that**
the beam former module (43) is configured to apply a time delay to at least one of the sensing and/or actuating elements (3a) or a plurality of the sensing and/or actuating elements (3a).

3. The electronic system (1) according to claim 1 or claim 2,
**characterized in that**
further comprises a sub-array definition module (42), which is configured to define at least one sub-array (4) of sensing and/or actuating elements (3a).
The electronic system (1) according to claim 3 **characterized in that** the sub-array definition module contains a channel select module (42a).

4. The electronic system (1) according to claim 3,
**characterized in that**
the electronic system (1) is configured such that signals can be handed over between different beam former modules (43), and further configured such that the sub-array definition module (42) is configured such that the at least one subarray (4) can be positioned at any arbitrary location in the larger electronic array (3) of the electronic system (1).

5. The electronic system (1) according to one of the preceding claims, **characterized in that**
at least two beam former modules (43) are provided and the electronic system (1) is further configured such that a partial beam-forming is done in separate beam former modules (43) before combining the signal in a second stage beam-former (43).

6. The electronic system (1) according to one of the preceding claims, **characterized in that**
the electronic system (1) further comprises an envelope detection module, wherein the envelope detection module (45) is configured to reduce the data rate towards the digital parts of the electronic system (1), especially wherein the envelope detection module (45) is implemented in the hardware and hardware-based.

7. The electronic system (1) according to one of the preceding claims, **characterized in that**
the electronic system (1) further comprises an apodization module (46), wherein the apodization module (46) is configured such that a hardware based apodization is performed before passing the signals into the beam-former.

8. The electronic system (1) according to one of claims 3 to 7,
**characterized in that**
the sub-array definition module (42) is configured to control the at least one sub-array (4) as a functional unit for sending at least one actuation signal and/or receiving at least one sensing signal.

9. The electronic system (1) according to one of the preceding claims, **characterized in that**
the sub-array definition module (42) is configured to define the plurality of sub-arrays (4) such that there is no overlap between the sensing and/or actuating elements (3a) of separate sub-arrays (4).

10. The electronic system (1) according to one of the preceding claims, **characterized in that**
the electronic system (1) comprises at least two sensing and/or actuating arrays (3), forming a least one sensing and/or actuating array set; and the control unit (40) is configured to control the sensing and/or actuating array set as one single sensing and/or actuating array (3).

11. The electronic system (1) according to one of the preceding claims, **characterized in that**
the electronic system (1) is configured such that the sensing and/or actuating array (3) is controlled according to a row/column based architecture.

12. The electronic system (1) according to one of the preceding claims, **characterized in that**
the electronic system (1) is configured such that a sub-array size is provided; sub-arrays (4) of the sub-array size are defined; and the sensing and/or actuating array (3) is controlled based on the individual sub-arrays (4).

13. The electronic system (1) according to one of the preceding claims, **characterized in that**
the sensing and/or actuating elements (3a) of each sub-array (4) are configured to provide an analog sensor signal; and the sensor signals of the sensing and/or actuating elements (3a) of each sub-array (4) are provided to one common analog-digital converter (7, 34).

14. The electronic system (1) according to one of the preceding claims, **characterized in that**
a beamforming architecture is implemented by a hardware beamforming module.

15. A method for operating an electronic system (1), especially an electronic system according to one of the preceding claims, comprising the following steps:
- defining a plurality of sub-arrays (4) within an electronic array (3) of a plurality of sensing and/or actuating elements; and
- controlling the individual sub-arrays (4) as functional units for sending signals and/or receiving signals.
